# EUROPEAN PATENT SPECIFICATION

(11) **EP 0 392 452 B1**
(45) Date of publication and mention of the grant of the patent: **07.01.1993**
(21) Application number: 90106837.9
(22) Date of filing: 10.04.1990
(51) Int. Cl.: C04B 35/46, H01C 7/04

(54) **Titanium- and antimony-oxide sintered product**
Sinterprodukt aus Titan- und Antimonoxid
Produit fritté à base d'oxyde de titane et d'antimoine

(30) Priority: 11.04.1989 JP 91139/89
(43) Date of publication of application: 17.10.1990
(73) Proprietor: AGENCY OF INDUSTRIAL SCIENCE AND TECHNOLOGY, Chiyoda-ku Tokyo (JP); NISSAN CHEMICAL INDUSTRIES LTD., Chiyoda-ku Tokyo (JP); Tosoh Corporation, Shinnanyo-shi Yamaguchi-ken (JP)
(72) Inventor: Takagi, Hiroyoshi, Kasugai-shi, Aichi-ken (JP); Awano, Masanobu, Chigusa-ku, Nagoya-shi, Aichi-ken (JP); Kubota, Yoshitaka, Sagamihara-shi, Kanagawa-ken (JP); Hoshi, Yuzi, Funabashi-shi, Chiba-ken (JP)
(74) Representative: Bühling, Gerhard, Dipl.-Chem.

(56) References cited:
- DE-A- 1 465 389
- US-A- 2 511 216
- US-A- 3 764 529

## Description

### BACKGROUND OF THE INVENTION

The present invention relates to a novel oxide sintered product and, in more detail, to the sintered product, the electric resistance of which changes with a change in temperature showing a negative value of temperature coefficient. Such sintered product can be used for the temperature measurement, temperature compensation, etc. as a thermistor, for example.

Conventionally, the Mn-Ni-Co type oxide sintered product etc. have been known as the thermistors for temperature measurement.

With such thermistors, however, the crystal structure changes in the vicinity of temperature of 300°C and the characteristics as a thermistor end up to change, hence the upper limit of usable temperature was as low as 300°C.

For this reason, in recent, several thermistors such as ones comprising Zr type oxide sintered product etc. have been developed as the thermistors for measuring high temperature. Such thermistors however show a high electric resistance below 700°C resulting in the incapability of using them for general purpose circuits.

The invention has been made in view of the conventional technical problems as mentioned above. The purpose of the invention is to provide a oxide sintered product usable as a thermistor capable of continuously measuring the temperature from room temperature to 700°C or so.

As a result of diligent investigations for solving said problems, the inventors have found a novel oxide sintered product leading to the completion of the invention.

### SUMMARY OF THE INVENTION

The invention provides a oxide sintered product characterized by being represented by a composition formula

(TiO₂)₁₋ₓ(SbO_{5/2})x

(0.1 ≧ x ≧ 0.005)

and having a bulk density of not less than 4.1 g/cm³

### BRIEF DESCRIPTION OF THE DRAWINGS

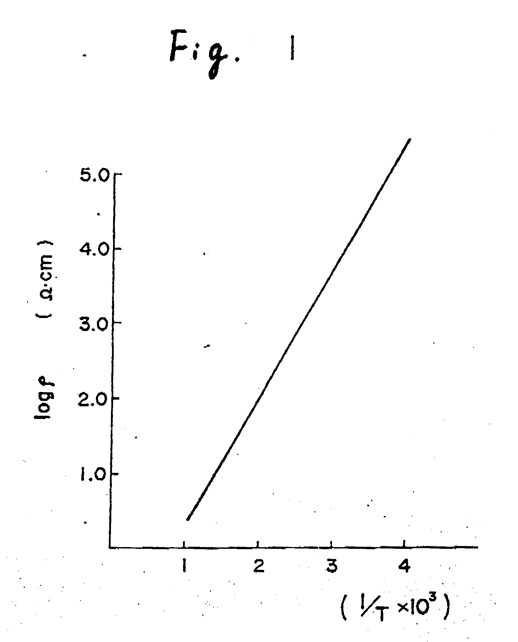

Fig. 1 through Fig. 4 are diagrams showing the relationship between specific resistance and temperature for the oxide sintered products of the invention obtained in Example 1 through 4, respectively, using the reciprocal of temperature and the logarithm of specific resistance.

### DETAILED DESCRIPTION OF THE INVENTION

In following, the invention will be illustrated in detail.

The oxide sintered product of the invention contains TiO₂ as a major ingredient. Since the melting point of this TiO₂ is as high as 1840°C and TiO₂ has a stable rutile structure at the temperature below melting point, the crystal structure of oxide sintered product does not change at a temperature of 700°C or so and thus any change in the characteristics as a thermistor accompanied with the change in crystal structure also does not take place. Moreover, the sintered product of the invention contains oxide of Sb, which introduces mobile electrons contributable to the conductivity in large amounts into the sintered product.

From the composition above, in the sintered product of the invention, B value being an index indicating the sensibility to temperature in following equation

ρ = ρ o exp B (1/T - 1/To)

(wherein, ρ and ρo indicate specific resistances at absolute temperatures of T and To, respectively.)
becomes to 1000 to 5000K at a temperature from room temperature to 700°C and the specific resistance at room temperature is 10⁷Ω.cm or less. By using the sintered product of the invention as a thermistor, therefore, it becomes possible to measure the temperature with good sensibility within a temperature range from room temperature to 700°C.

Here, when the amount of oxide of Sb contained is less than the range of composition formula above, the specific resistance at room temperature of the sintered product obtained becomes high, and, when it is more than the range of composition formula, the change in B value due to temperature becomes significant resulting in the characteristics of sintered product as a thermistor being in danger of causing dispersion. The oxide sintered product of the invention is a dense sintered product having a bulk density of not less than 4.1 g/cm³. From this fact, too, the change in B value of sintered product due to temperature becomes small.

Based on the reasons as mentioned above, the sintered product of the invention becomes to be preferably used as a thermistor permitting continuous measurement at a temperature from room temperature to 700°C. Furthermore, from the fact that the B value and the specific resistance at room temperature of the invention lie within a range above, this sintered product can be applied as it is to the thermistor instruments currently on the market.

The sintered product of the invention can be obtained by molding and sintering, for example TiO₂ powder with Sb in a form of solid solution after the preparation of composition.

For the molding method of the powder of raw material, various methods, for example, a press method, an extrusion method, an injection molding method, a slip casting method, a tape casting method, etc. can be adopted.

At this time, it is preferable that a density of the molded powder should be not less than 2.0g/cm³, and if the density is less than 2.0g/cm³, a relative density of the sintered product may become low.

The molded powder having the density of not less than 2.0g/cm³ can be obtained under an adjusted condition of molding method, for example when the press method is adopted as the molding method, it is preferably to mold under a pressure of higher than 98 MPa (1 ton/cm²).

Moreover, the sintering can be performed in the atmosphere and the sintered product of the invention can be obtained by sintering for more than 1 hour at a temperature of 1300 to 1400°C or so.

In following, the invention will be illustrated in more detail based on the examples, but the invention is not confined to these at any rate.

### Example 1

TiCl₄ was added to a 3N aqueous solution of hydrochloric acid and the mixture was stirred, then SbCl₅ was added to said aqueous solution, and the ratio of TiCl₄ to SbCl₅ were 1.0 mol %:99.0 mol % in the solution. Thereafter, Methyl Red was added to this solution as an indicator and aqueous ammonia was added with stirring to the solution until the solution changed to yellow, and precipitates were obtained in the solution. Next, the precipitates were filtered, dried at 100°C, and then calcined for 1 hour at 500°C. Following this, the calcined product obtained was pulverized for 24 hours with ball mill, which was used as the powder of raw material.

The powder of raw material obtained in this way was molded (Kl = 19.3 mm, W = 4.2 mm, h = 3.0 mm) by a cold isostatic method under a pressure of 98 MPa (1 ton/cm²) and then it was fired for 2 hours at a temperature of 1300°C to obtain sintered product.

The composition of sintered product thus obtained was

(Ti0₂)_{0.99}(Sb0_{5/2})_{0.01}

and the bulk density was 4.18 g/cm³.

Next, the specific resistance of this sintered product was measured while varying the temperature from 12 to 700°C. Taking reciprocal of temperature and logarithm of specific resistance on the abscissa and ordinate, respectively, the relationship between specific resistance and temperature is shown in Fig. 1. As a result, it was known that the B value of the sintered product obtained was 1708K showing a constant value. Further, when measuring the specific resistance at room temperature of this sintered product, it showed to be 1.0 x 10⁴ Ω .cm.

### Example 2

The sintered product was obtained by the same method as that in Example 1 except that TiCl₄ was added to a 3N aqueous solution of hydrochloric acid and the mixture was stirred, then SbCl₅ was added to said aqueous solution, and the ratio of TiCl₄ to SbCl were 97.5 mol % :2.5 mol % in the solution.

The composition of sintered product thus obtained was

(TiO₂)_{0.975}(SbO_{5/2})0.025

and the bulk density was 4.23 g/cm³.

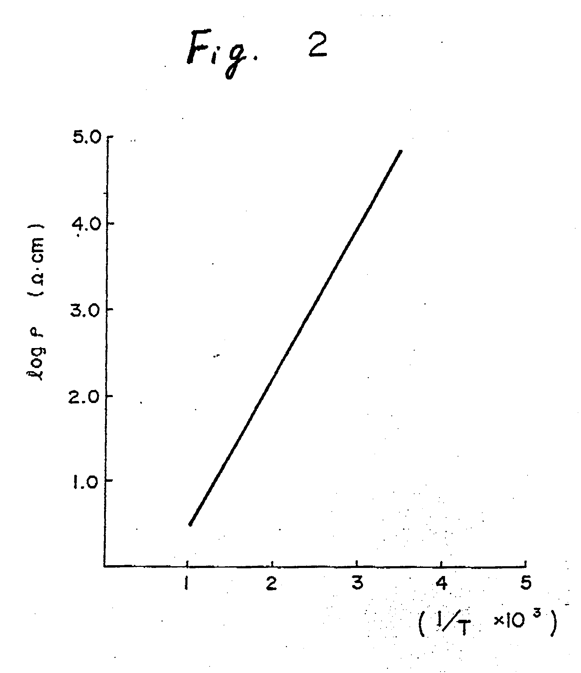

Moreover, the specific resistance of this sintered product was measured while varying the temperature. Taking reciprocal of temperature and logarithm of specific resistance on the abscissa and ordinate, respectively, the relationship between specific resistance and temperature is shown in Fig. 2. The B value of the sintered product obtained was 1747K showing a constant value. Moreover, the specific resistance at room temperature of this sintered product was 2.0 x 10⁴Ω .cm.

Moreover, the specific resistance of this sintered product was measured while varying the temperature. Taking reciprocal of temperature and logarithm of specific resistance on the abscissa and ordinate, respectively, the relationship between specific resistance and temperature is shown in Fig. 2. The B value of the sintered product obtained was 1708K showing a constant value. Moreover, the specific resistance at room temperature of this sintered product was 107 Ω .cm.

### Example 3

The sintered product was obtained by the same method as that in Example 1 except that TiCl₄ was added to a 3N aqueous solution of hydrochloric acid and the mixture was stirred, then SbCl₅ was added to said aqueous solution, and the ratio of TiCl₄ to SbCl₅ were 95.0 mol %: 5.0 mol % in the solution.

The composition of sintered product thus obtained was

(Ti0₂)_{0.95}(Sb0_{5/2})_{0.05}

and the bulk density was 4.28 g/cm³.

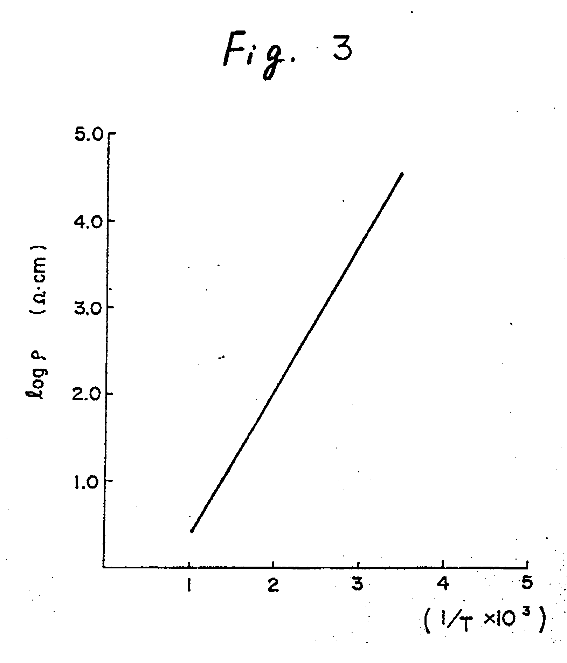

Moreover, the specific resistance of this sintered product was measured while varying the temperature. Taking reciprocal of temperature and logarithm of specific resistance on the abscissa and ordinate, respectively, the relationship between specific resistance and temperature is shown in Fig. 3. The B value of the sintered product obtained was 1738K showing a constant value. Moreover, the specific resistance at room temperature of this sintered product was 1.5 x 10⁴Ω .cm.

### Example 4

The sintered product was obtained by the same method as that in Example 1 except that TiCl₄ was added to a 3N aqueous solution of hydrochloric acid and the mixture was stirred, then SbCl₅ was added to said aqueous solution, and the ratio of TiCl₄ to SbCl₅ were 90.0 mol %: 10.0 mol % in the solution.

The composition of sintered product thus obtained was

(Ti0₂)_{0.9}(Sb0_{5/2})_{0.1}

and the bulk density was 4.28 g/cm³.

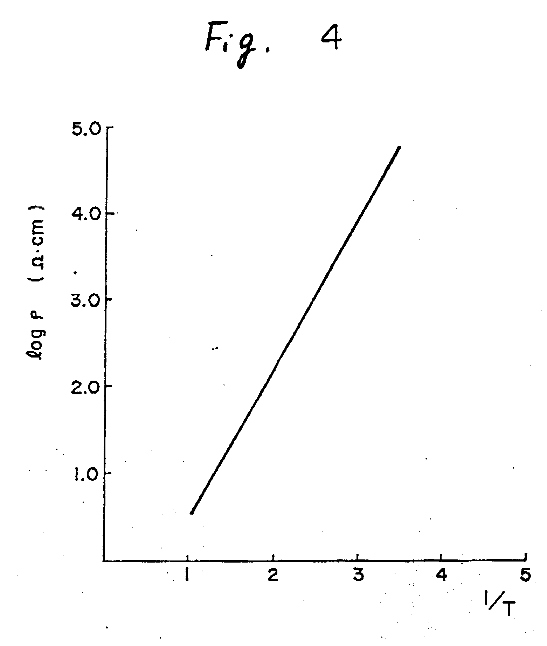

Moreover, the specific resistance of this sintered product was measured while varying the temperature. Taking reciprocal of temperature and logarithm of specific resistance on the abscissa and ordinate, respectively, the relationship between specific resistance and temperature is shown in Fig. 4. The B value of the sintered product obtained was 1650K showing a constant value. Moreover, the specific resistance at room temperature of this sintered product was 3.0 x 10⁴Ω .cm.

As described above, with the sintered product of the invention, the specific resistance is as low as not more than 10⁷Ω .cm, it has a property of electric resistance changing with a change in temperature, wherein the temperature coefficient is negative, and the crystal structure does not change even at a temperature of 700°C or so. It can be used therefore as a thermistor capable of continuously measuring the temperature from room temperature to 700°C, which has never been realized up to this day.

## Claims

1. An oxide sintered product represented by a composition formula
(TiO₂)₁₋ₓ(SbO_{5/2})x
(0.1 ≧ x ≧ 0.005)
and having a bulk density of not less than 4.1 g/cm³.

## Patentansprüche

1. Oxid-Sinterprodukt, **dadurch gekennzeichnet**, daß es durch die Zusammensetzungsformel
(TiO₂)₁₋ₓ(SbO_{5/2})ₓ mit (0,1 ≧ x ≧ 0,005)
dargestellt wird und eine Schüttdichte von nicht weniger als 4,1 g/cm³ besitzt.

## Revendications

1. Produit fritté à base d'oxyde représenté par la formule de composition:
(TiO₂)₁₋ₓ(SbO_{5/2})ₓ
(0,1 ≧ x ≧ 0,005) et ayant une masse volumique non tassée non inférieure à 4,1 g/cm³.
